# EUROPÄISCHE PATENTSCHRIFT

(11) **EP 4 288 474 B1**
(45) Veröffentlichungstag und Bekanntmachung des Hinweises auf die Patenterteilung: **19.11.2025**
(21) Anmeldenummer: 22702011.2
(22) Anmeldetag: 01.02.2022
(51) Int. Cl.: C08G 18/22, C08G 18/32, C08G 18/38, C08G 18/48, C08G 18/66, C08K 7/28

(54) **ZWEIKOMPONENTIGE POLYURETHANSPACHTELMASSE MIT EINSTELLBARER TOPFZEIT**
TWO-COMPONENT POLYURETHANE CASTING COMPOSITION HAVING AN ADJUSTABLE POT LIFE
MASTIC DE POLYURÉTHANE À DEUX COMPOSANTS AYANT UNE STABILITÉ EN POT RÉGLABLE

(30) Priorität: 02.02.2021 EP 21154812
(43) Veröffentlichungstag der Anmeldung: 13.12.2023
(73) Patentinhaber: Sika Technology AG, 6340 Baar (CH)
(72) Erfinder: ROTH, Semjon, 5400 Baden (CH); MEISTER, Stefan, 8642 St. Lorenzen im Mürztal (AT); CORSARO, Antonio, 8105 Regensdorf (CH); CHOFFAT, Fabien, 4522 Rüttenen (CH)
(74) Vertreter: Sika Patent Attorneys
(86) Internationale Anmeldenummer: PCT/EP2022/052310
(87) Internationale Veröffentlichungsnummer: WO 2022/167403

(56) Entgegenhaltungen:
- WO-A1-2020/127485
- WO-A1-98/15586
- DE-A1- 3 932 171
- GB-A- 2 188 327

## Beschreibung

### Technisches Gebiet

Die Erfindung betrifft das Gebiet der zweikomponentigen Polyurethanzusammensetzungen und ihre Verwendung als schleifbare Spachtelmassen, sowie ein Verfahren zum Verfüllen von Hohlräumen, Löchern oder Spalten, insbesondere von Holz, mit einer solchen Polyurethanzusammensetzung.

### Stand der Technik

Holz ist ein beliebtes Bau- und Fertigungsmaterial und wird auch heute noch vielseitig eingesetzt, beispielsweise im Möbelbau oder als Boden in Innenräumen. Gerade bei solchen Anwendungen ist es erwünscht, dass die Holzbretter eine glatte Oberfläche aufweisen. Holz ist jedoch ein Naturmaterial, und als solches weisen flächige Holzbretter oder -dielen, wie sie etwa für Böden verwendet werden, regelmässig Fehlstellen wie Risse, Astspalten und -löcher und ähnliche Ausnehmungen an der Oberfläche auf. Diese Fehlstellen müssen ausgeglichen, also geklebt, gespachtelt oder gekittet werden, um eine zur Endbearbeitung geeignete Oberfläche zu schaffen. Diese Endbearbeitung umfasst meist Schleifen oder Sanden, gefolgt von Veredelungen und weiteren Behandlungen. Insbesondere ästige Stellen sind problematisch in der Bearbeitung der Oberflächen. Astscheiben neigen entweder zum Herausfallen, wodurch grosse Löcher entstehen, oder weisen häufig sternförmige Trockenschwindrisse auf. Lösungsvorschläge zur Herstellung einer einheitlichen Oberfläche ohne Fehlstellen im Holz sind vielfältig. Sie reichen vom Ausschneiden der Fehlstellen bzw. zum Ausbrechen der Astscheiben und Einsetzen von Blindstücken bis hin zum Verleimen von Astscheiben. Alle diese Verfahren sind zeitaufwändig und oftmals ineffizient in Bezug auf Materialverwertung.

Es wurden daher Verfahren entwickelt, bei denen eine geeignete Füllmasse in die Fehlstellen eigebracht wird, welche dann ausgehärtet und mit dem Holz geschliffen wird. Beispielsweise lehrt die DE 102 30 574 A1 eine thermoplastische Füllmasse, die in die Fehlstellen eingebracht wird und rasch aushärtet. Nachteilig hierbei ist jedoch, dass die thermoplastische Füllmasse deutlich erwärmt werden muss, was den Prozess aufwändig macht und das Holz thermisch belasten kann. Es ist allgemein erwünscht, dass die zu verfüllende Spachtelmasse gut an den in diesem Markt verwendeten Holzarten haftet, eine ähnliche Härte wie das Holz aufweist, aber gleichzeitig eine gewisse Elastizität, um den natürlichen Bewegungen (wie Kontraktionen) des Holzsubstrats folgen zu können, ohne dass Risse oder dergleichen entstehen.

Aus diesem Grund wurden auch Polyurethanzusammensetzungen für diesen Zweck entwickelt. Polyurethanzusammensetzungen sind bekannt gut auf Holz zu Haften und können mit einem breiten Eigenschaftsprofil formuliert werden, und die Einstellung einer geeigneten Härte, Elastizität, aber auch Farbe gelingt meist zufriedenstellend. Insbesondere zweikomponentige Polyurethanzusammensetzungen sind hierfür geeignet. Diese haben gegenüber einkomponentigen den Vorteil, dass sie nach dem Mischen schnell aushärten und deshalb bereits nach kurzer Zeit weiterverarbeitet, also beispielsweise geschliffen werden können.

Auf der anderen Seite sind mit zweikomponentigen Polyurethanzusammensetzungen aber auch immer Kompromisse einzugehen. Für die Anwendung zweikomponentiger Polyurethanzusammensetzungen als Spachtelmassen wäre es zwar generell wünschenswert, eine genügend lange Verarbeitungszeit (Topfzeit) der gemischten Zusammensetzung, ohne zu schnellem Viskositätsanstieg durch die beginnende Aushärtung, mit einer anschliessend nach Verarbeitung aber sehr raschen Aushärtung und ausserordentlich schnellem Festigkeitsaufbau kombinieren zu können. Dies lässt sich mit üblichen Zweikomponenten-zusammensetzungen aber kaum erreichen. Entweder ist die Topfzeit sehr kurz bei Zusammensetzungen, die rasch aushärten und schnell Festigkeit aufbauen, oder aber die Aushärtung und der Festigkeitsaufbau sind langsam, wenn Zusammensetzungen mit langer Topfzeit verarbeitet werden. Für eine industrielle Verarbeitung mit raschen Taktzeiten wäre es wünschenswert, wenn eine genügend lange, idealerweise sogar einstellbare Topfzeit für eine optimale Verarbeitung der noch nicht gehärteten Spachtelmasse gegeben wäre, ohne nennenswerten Viskositätsanstieg währenddessen, aber nach Ende der Verarbeitung dann eine sehr rasche Aushärtung erfolgen würde, wobei die ausgehärtete Masse dann sofort schleifbar wäre. Dies ist mit den bisher hergestellten Spachtelmassen auf Polyurethanbasis noch nicht gelungen.

Die DE 198 58 818 A1 lehrt beispielsweise wässrige Spachtelmassen auf Basis von zweikomponentigen Polyurethanzusammensetzungen. Diese sind gut schleifbar, benötigen allerdings eine erhebliche Wartezeit bis die Schleifbarkeit nach dem Aushärten gegeben ist, insbesondere wenn die Topfzeit lange genug für eine gute Verarbeitbarkeit eingestellt wurde.

WO 98/15586 A1 als anderes Beispiel lehrt ebenfalls eine zweikomponentige Polyurethanspachtelmasse für das Glätten von Holz. Diese weist eine hohe Viskosität und/oder einen raschen Viskositätsanstieg nach Applikation auf, so dass die Masse auch von senkrechten Flächen nicht unkontrolliert abläuft. Allerdings ist es schwierig, mit einer so hochviskosen oder rasch aushärtenden Spachtelmasse alle Hohlräume komplett auszufüllen, was beispielsweise bei Bodenbelägen in Extremfällen zu akustischen Störungen führen kann.

Aus DE 39 32 171 A1 sind Spachtelmassen auf Basis zweikomponentiger Polyuethanzusammensetzungen bekannt, die neben einem Zinndialkylmercaptid als Katalysator Hohlglaskugeln enthalten.

Es besteht daher der Wunsch nach Spachtelmasse auf Basis von zweikomponentigen Polyurethanzusammensetzungen, die während einer genügend langen Topfzeit ohne Viskositätsanstieg bequem verarbeitet werden kann und die nach Applikation aber unabhängig von der Schichtdicke sehr rasch aushärtet und innert kürzester Zeit geschliffen oder gesandet werden kann. Neben der guten Schleifbarkeit sollte sie zusätzlich eine genügend hohe Shore D Härte aufweisen, also beispielsweise 60 oder mehr. Weiterhin wünschenswert wäre es, die Topfzeit einer solcher Zusammensetzung für die gewünschte Anwendung einstellen zu können.

### Darstellung der Erfindung

Aufgabe der vorliegenden Erfindung ist es daher, eine Spachtelmasse auf Basis einer zweikomponentigen Polyurethanzusammensetzung zur Verfügung zu stellen, welche sehr schnell zu einer schleifbaren, mechanisch ausgezeichneten und als Holzspachtelmasse geeigneten Masse mit genügend hoher Härte aushärtet, aber dabei gleichzeitig eine genügend lange, innerhalb gewisser Grenzen einstellbare Topfzeit aufweist, dass sie problemlos verarbeitet werden kann.

Überraschenderweise wird diese Aufgabe mit der erfindungsgemässen Polyurethanzusammensetzung gemäss Anspruch 1 gelöst. Sie umfasst mindestens ein Polyol, ein kurzkettiges Diol sowie eine Verbindung mit mindestens einer Thiolgruppe in der ersten Komponente und einem hohen Gehalt an Polyisocyanat in der zweiten Komponente. Weiterhin enthält die Zusammensetzung einen Metallkatalysator für die Aushärtung der Zusammensetzung, welcher Thiokomplexe bilden kann, wobei das Verhältnis von Thiolgruppen zu Metallatomen in der Zusammensetzung festgelegt ist. Darüber hinaus enthält die Zusammensetzung mikroskopische Hohlkugeln und ein Trocknungsmittel auf Alumosilikatbasis. Nach Mischen der Komponenten härtet sie nach einer genügend langen, innerhalb gewisser Grenzen einstellbaren Topfzeit sehr schnell aus und erreicht bereits nach kurzer Zeit, z.B. wenigen Minuten bis Stunden, sehr gute mechanische Werte und kann problemlos weiterverarbeitet werden. Die Zusammensetzung verfügt im ausgehärteten Zustand über eine sehr hohe Härte und gute Elastizität und ist hervorragend schleifbar.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft Polyurethanzusammensetzung bestehend aus einer ersten und einer zweiten Komponente; wobei
- die erste Komponente **A**
   - mindestens ein Polyol **A1** mit einer OH-Funktionalität im Bereich von 1.5 bis 4 und einem mittleren Molekulargewicht im Bereich von 250 bis 15'000 g/mol, und
   - mindestens ein Diol **A2** mit zwei Hydroxylgruppen, die über eine C2- bis C9-Kohlenstoffkette verbunden sind, und
   - mindestens eine Verbindung **T,** die mindestens eine Thiolgruppe aufweist, umfasst; und
- die zweite Komponente **B**
- mindestens ein Polyisocyanat **I**, umfasst;

wobei in einer der Komponenten zusätzlich mindestens ein Metallkatalysator **K** für die Reaktion von Hydroxylgruppen und Isocyanatgruppen enthalten ist, der Thiokomplexe bilden kann;
und wobei das molare Verhältnis aller Thiolgruppen der mindestens einen Verbindung **T** zu allen Metallatomen des mindestens einen Metallkatalysators **K** zwischen 5 : 1 und 100 : 1 liegt;
und wobei das molare Verhältnis aller NCO-Gruppen der Polyisocyanate I zu allen OH-Gruppen der Polyole **A1** und **A2** = 0.9 : 1 - 1.5 : 1, insbesondere 1.05 : 1 - 1.3 : 1, beträgt;
und wobei die Zusammensetzung in wenigstens einer der beiden Komponenten zwischen 3 und 25 Gew.-%, bezogen auf die gesamte Zusammensetzung, mindestens einer Art mikroskopischer Hohlkugeln **H** enthält, wobei die mikroskopischen Hohlkugeln **H** eine Druckfestigkeit, gemessen nach ASTM D3102-72, von mindestens 10 MPa aufweisen und eine Dichte von mindestens 0.2 kg/L aufweisen;
und wobei die Zusammensetzung in wenigstens einer der beiden Komponenten zwischen 2.5 und 7.5 Gew.-%, bezogen auf die gesamte Zusammensetzung, mindestens eines Trocknungsmittels **D** enthält, wobei das Trocknungsmittel **D** ein Alumosilikat ist.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument die molare Masse (in Gramm pro Mol) eines Moleküls oder eines Molekül-Rests. Als "mittleres Molekulargewicht" wird das Zahlenmittel Mₙ einer polydispersen Mischung von oligomeren oder polymeren Molekülen oder Molekül-Resten bezeichnet, welches üblicherweise mittels Gelpermeationschromatographie (GPC) gegen Polystyrol als Standard bestimmt wird. Als "Raumtemperatur" wird im vorliegenden Dokument eine Temperatur von 23°C bezeichnet. Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.

Als "primäre Hydroxylgruppe" wird eine OH-Gruppe bezeichnet, welche an ein C-Atom mit zwei Wasserstoffen gebunden ist.

Als "Topfzeit" wird in diesem Dokument die Zeit bezeichnet, innerhalb welcher die Polyurethanzusammensetzung nach dem Mischen der beiden Komponenten verarbeitet werden kann, bevor die Viskosität durch das Voranschreiten der Vernetzungsreaktion zu hoch für eine weitere Verarbeitung geworden ist.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich 0.05 bis 0.25%, gemeint sind.

Als "Raumtemperatur" wird im vorliegenden Dokument eine Temperatur von 23°C bezeichnet.

Als "lagerstabil" oder "lagerfähig" wird eine Substanz oder eine Zusammensetzung bezeichnet, wenn sie bei Raumtemperatur in einem geeigneten Ge-binde während längerer Zeit, typischerweise mindestens 3 Monaten bis zu 6 Monaten und mehr, aufbewahrt werden kann, ohne dass sie sich in ihren An-wendungs- oder Gebrauchseigenschaften, insbesondere der Viskosität und der Vernetzungsgeschwindigkeit, durch die Lagerung in einem für ihren Gebrauch relevanten Ausmass verändert.

Alle im Dokument erwähnten Industriestandards und Normen beziehen sich auf die zum Zeitpunkt der Einreichung der Erstanmeldung gültigen Fassungen.

Die erste Komponente **A** enthält zunächst mindestens ein Polyol **A1** mit einer OH-Funktionalität im Bereich von 1.5 bis 4 und einem mittleren Molekulargewicht im Bereich von 250 bis 15'000 g/mol.

Geeignete Polyole **A1** sind prinzipiell alle gängigen Polyole zur Herstellung von Polyurethanpolymeren. Geeignet sind insbesondere Polyetherpolyole, Polyesterpolyole, Poly(meth)acrylatpolyole, Polybutadienpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran, 1,3-Propandiol oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 400 bis 15'000 g/mol, sowie Polyoxyethylendiole, Polyoxyethylentriole, Polyoxypropylendiole und Polyoxypropylentriole mit einem Molekulargewicht von 400 bis 15'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, 3-Methyl-1,5-Pentandiol (MPD) , 1,9-Nonadiol (ND), Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Ebenfalls geeignet sind Polycarbonate, die aus der Copolymerisation von CO₂ mit Epoxiden, wie Ethylenoxid und Propylenxid, zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Alle genannten Polyole weisen ein mittleres Molekulargewicht von 250 bis 15'000 g/mol, insbesondere von 400 bis 10'000 g/mol, bevorzugt von 1'000 bis 8'000 und eine mittlere OH-Funktionalität im Bereich von 1.5 bis 4, bevorzugt 1.7 bis 3, auf. Die Zusammensetzung kann jedoch durchaus auch Anteile an Monoolen (Polymere mit nur einer Hydroxylgruppe) enthalten.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Die erste Komponente **A** enthält weiterhin mindestens ein Diol **A2** mit zwei Hydroxylgruppen, die über eine C2- bis C9-Kohlenstoffkette verbunden sind.

Geeignet als Diol **A2** sind lineare oder verzweigte Alkylendiole mit zwei primären oder sekundären Hydroxylgruppen, Alkylendiole mit einer primären und einer sekundären Hydroxylgruppe sowie cycloaliphatische Diole.

Bevorzugt ist das Diol **A2** ein lineares aliphatisches Diol mit zwei primären Hydroxylgruppen, die über eine C4- bis C9-Kohlenstoffkette verbunden sind. Ein solches Diol hat den Vorteil, dass elastische Polyurethane mit besonders hohen E-Moduln im Bereich niedriger Dehnung, beispielsweise zwischen 0 und 5%, erhalten werden, was insbesondere für Holzspachtelmassen vorteilhaft ist.

Insbesondere ist das Diol **A2** ausgewählt aus der Gruppe bestehend aus Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 1,4-Butandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Besonders bevorzugt ist das Diol **A2** ausgewählt aus der Gruppe bestehend aus 1,4-Butandiol, 1,5-Pentandiol, 1,6-Hexandiol, 1,7-Heptandiol, 1,8-Octandiol und 1,9-Nonandiol.

Am meisten bevorzugt ist das Diol **A2** ausgewählt aus der Gruppe bestehend aus 1,4-Butandiol, 1,5-Pentandiol, 1,6-Hexandiol und 1,9-Nonandiol. Diese Diole sind kommerziell gut zugänglich und ermöglichen Polyurethane mit besonders hohen E-Moduln bei geringer Dehnung nach der Aushärtung.

Bevorzugt enthält die erste Komponente **A** zwischen 5 und 25 Gew.-%, insbesondere 10 bis 20 Gew.-%, an Diol **A2.**

Zusätzlich zu diesen genannten Polyolen **A1** und **A2** können kleine Mengen von weiteren niedermolekularen zwei- oder mehrwertigen Alkoholen wie beispielsweise Diethylenglykol, Triethylenglykol, die isomeren Dipropylenglykole und Tripropylenglykole, die isomeren Decandiole und Undecandiole, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedermolekulare Alkoxylierungsprodukte der vorgenannten zwei- und mehrwertigen Alkohole, sowie Mischungen der vorgenannten Alkohole mitverwendet werden. Weiterhin können auch Polyole, die andere Heteroatome enthalten, wie beispielsweise Methyldiethanolamin oder Thiodiglykol, enthalten sein.

Die erste Komponente **A** enthält weiterhin mindestens eine Verbindung **T,** die mindestens eine Thiolgruppe aufweist. Geeignet sind alle Verbindungen, die mindestens eine Thiol- oder Mercaptogruppe aufweisen und die sich in der erfindungsgemässen Zusammensetzung einformulieren lassen. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 1 bis 4, am meisten bevorzugt 1 oder 2 Thiolgruppen. Verbindungen mit einer Thiolgruppe haben den Vorteil, dass keine tendenziell schwerlöslichen Komplexe mit dem Metallkatalysator **K** entstehen und die Topfzeit besonders genau eingestellt werden kann. Verbindungen mit zwei Thiolgruppen haben den Vorteil, dass die mechanischen Eigenschaften der Zusammensetzung nach dem Aushärten verbessert werden.

Geeignete Verbindungen **T** mit einer Thiolgruppe sind beispielsweise 3-Mercaptopropyltrimethoxysilan, 3-Mercaptopropyltriethoxysilan, 3-Mercapto-1,2-propandiol, 2-Mercaptotoluimidazol oder 2-Mercaptobenzothiazol.

Geeignete Verbindungen **T** mit mehr als einer Thiolgruppe sind beispielsweise 1,8-Dimercapto-3,6-dioxaoctane, Ethylenglykol-di(3-mercaptopropionat), Ethylenglykol-dimercaptoacetat, Dipentaerythritol-hexa(3-mercaptopropionat), 2,3-Dimercapto-1,3,4-thiadiazol oder Pentaerythritol-tetrakis(3-mercaptopropionat).

Bevorzugt ist die Verbindung **T** ausgewählt aus der Gruppe bestehend aus 1,8-Dimercapto-3,6-dioxaoctane, Ethylenglykol-di(3-mercaptopropionat), Ethylenglykol-dimercaptoacetat, Dipentaerythritol-hexa(3-mercaptopropionat) und 3-Mercaptopropyl-trimethoxysilan.

Bevorzugt enthält Komponente **A,** bezogen auf Komponente **A,** 0.25 bis 5 Gew.- %, bevorzugt 1 bis 3 Gew.-%, insbesondere 1.5 bis 2 Gew.-%, der Verbindung **T,** die mindestens eine Thiolgruppe aufweist,

Das molare Verhältnis aller Thiolgruppen der mindestens einen Verbindung **T** zu allen Metallatomen des mindestens einen Metallkatalysators **K** muss zwischen 5 : 1 und 100 : 1 liegen. Durch dieses Mengenverhältnis kann die Topfzeit eingestellt werden, und zwar innerhalb der intrinsischen Grenzen der jeweiligen Zusammensetzung, bedingt beispielsweise durch den Gehalt an Katalysator, die Reaktivität der enthaltenen Isocyanate und deren Menge. Dabei ist die untere Grenze der Topfzeit diejenige Topfzeit, die in einer gegebenen Zusammensetzung bei Verwendung einer bestimmten Katalysatormenge ohne Zusatz der Verbindung **T** erhalten wird. In vielen Fällen, die für die erfindungsnahe Anwendung als Strukturklebstoff oder Kompositwerkstoffmatrix geeignet sind und bedingt durch die hohe Menge an Isocyanatgruppen in Anwesenheit eines Katalysators aber ohne Verbindung **T,** wird dabei gar keine wirkliche Topfzeit erreicht, und die Zusammensetzung beginnt praktisch beim Mischen der beiden Komponenten auszuhärten.

Die obere Grenze der einstellbaren Topfzeit ist dementsprechend diejenige Topfzeit, die ohne Verwendung eines Katalysators bedingt durch die unkatalysierte Isocyanat-Hydroxylreaktion erreicht werden würde. Diese Reaktion beginnt auch ohne Verwendung eines Katalysators irgendwann nach dem Mischen der beiden Komponenten anzulaufen. Allerdings läuft die Reaktion ohne Katalysator langsamer und unter Ausbildung minderwertiger mechanischer Eigenschaften des gehärteten Materials ab.

Der wesentliche Vorteil, der durch die erfindungsgemässe zweikomponentige Polyurethanzusammensetzung erreicht wird, ist ein ausserordentlich rasch aushärtendes und Festigkeit aufbauendes System, das aber gleichzeitig eine ausreichend lange Topfzeit aufweist, um anwenderfreundlich verarbeitet werden zu können. Somit können beispielsweise Verspachtelungen auch an grösseren Oberflächen durchgeführt werden, die sehr kurz nach der Applikation der Spachtelmasse bereits geschliffen oder gesandet werden können. Dies führt beispielsweise zu einer signifikanten Verkürzung von Taktzeiten in der industriellen Fertigung. Ein weiterer Vorteil der erfindungsgemässen Polyurethanzusammensetzungen ist die Möglichkeit, die Topfzeit wie oben beschrieben einstellen zu können. Dies ist insbesondere für automatisierte Anwendungen sehr vorteilhaft und kann beispielsweise eine weitere Optimierung der Taktzeiten in der industriellen Fertigung ermöglichen, da die Topfzeit auf die gewünschte Anwendung eingestellt werden kann.

Die zweite Komponente **B** enthält zunächst mindestens ein Polyisocyanat **I.**

Das Polyisocyanat **I** ist in relativ hohen Mengen enthalten, was für die Ausbildung genügend guter mechanischer Eigenschaften für die Verwendung als Spachtelmasse, insbesondere für Holz, sehr vorteilhaft ist.

Die zweite Komponente enthält bevorzugt so viel an Polyisocyanat **I**, dass mindestens 5 Gew.-%, insbesondere mindestens 6 Gew.-%, bevorzugt mindestens 7.5 Gew.-%, bezogen auf die gesamte Polyurethanzusammensetzung, an Isocyanatgruppen enthalten sind.

Als Polyisocyanate I für die Herstellung des Polyurethanpolymers in der erfindungsgemässen Zusammensetzung können alle handelsüblichen, für die Polyurethanherstellung geeigneten Polyisocyanate, insbesondere Diisocyanate, verwendet werden.

Geeignete Polyisocyanate sind insbesondere monomere Di- oder Triisocyanate, sowie Oligomere, Polymere und Derivate der monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, mund p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat.

Davon bevorzugt sind MDI, TDI, HDI und IPDI.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur^{®} N 100 und N 3200 (von Covestro), Tolonate^{®} HDB und HDB-LV (von Vencorex) und Duranate^{®} 24A-100 (von Asahi Kasei); HDI-Isocyanurate, wie Desmodur^{®} N 3300, N 3600 und N 3790 BA (alle von Covestro), Tolonate^{®} HDT, HDT-LV und HDT-LV2 (von Vencorex), Duranate^{®} TPA-100 und THA-100 (von Asahi Kasei) und Coronate^{®} HX (von Nippon Polyurethane); HDI-Uretdione wie Desmodur^{®} N 3400 (von Covestro); HDI-Iminooxadiazindione wie Desmodur^{®} XP 2410 (von Covestro); HDI-Allophanate wie Desmodur^{®} VP LS 2102 (von Covestro); IPDI-Isocyanurate, wie beispielsweise in Lösung als Desmodur^{®} Z 4470 (von Covestro) oder in fester Form als Vestanat^{®} T1890/ 100 (von Evonik); TDI-Oligomere wie Desmodur^{®} IL (von Covestro); sowie gemischte Isocyanurate auf Basis TDI/HDI, zum Beispiel als Desmodur^{®} HL (von Covestro). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur^{®} CD, Desmodur^{®} PF, Desmodur^{®} PC (alle von Covestro) oder Isonate^{®} M 143 (von Dow), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Covestro), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt ist das Polyisocyanat ausgewählt aus der Gruppe bestehend aus MDI, TDI, HDI und IPDI und Oligomeren, Polymeren und Derivaten der genannten Isocyanate, sowie Mischungen davon.

Bevorzugt enthält das Polyisocyanat Isocyanurat-, Iminooxadiazindion-, Uretdion-, Biuret-, Allophanat-, Carbodiimid-, Uretonimin- oder Oxadiazintrion-Gruppen.

Besonders bevorzugt als Polyisocyanat sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gew.-%, insbesondere 60 bis 90 Gew.-%.

Insbesondere bevorzugt als Polyisocyanat ist polymeres MDI und bei Raumtemperatur flüssige MDI-Typen, welche Anteile von MDI-Carbodiimiden oder deren Addukte enthalten.

Mit diesen Polyisocyanaten werden besonders gute Verarbeitungseigenschaften und besonders hohe Festigkeiten erhalten.

Das Polyisocyanat der zweiten Komponente kann Anteile von Isocyanatgruppen aufweisenden Polyurethanpolymeren enthalten. Entweder kann die zweite Komponente ein separat hergestelltes Isocyanatgruppen aufweisendes Polyurethanpolymer umfassen, oder das Polyisocyanat wurde mit mindestens einem Polyol, insbesondere einem Polyetherpolyol, vermischt, wobei die Isocyanatgruppen gegenüber den OH-Gruppen in einem stöchiometrischen Überschuss vorliegen.

In der erfindungsgemässen Zusammensetzung ist Polyisocyanat **I** bevorzugt in einer Menge von 10 Gew.-% bis 50 Gew.-%, insbesondere 15 Gew.-% bis 45 Gew.-%, besonders bevorzugt 20 Gew.-% bis 35 Gew.-%, bezogen auf die gesamte Zusammensetzung, vorhanden.

Die erste Komponente **A** und/oder die zweite Komponente **B** enthält weiterhin mindestens einen Metallkatalysator **K** für die Reaktion von Hydroxylgruppen und Isocyanatgruppen, der Thiokomplexe bilden kann. Als Metallkatalysator **K** sind somit alle Metallkatalysatoren geeignet, welche in der Polyurethanchemie als Vernetzungskatalysator eingesetzt werden können und gleichzeitig in Gegenwart von Thiolen mit diesen Thiokomplexe bilden können.

Bevorzugt ist der Metallkatalysator **K** nur in der ersten Komponente **A** enthalten. Dies hat den Vorteil, dass eine bessere Lagerstabilität erreicht wird.

Geeignete Metallkatalysatoren sind beispielsweise Bismut-, Zink-, Zinn- oder Zirkoniumverbindungen, was Komplexe und Salze dieser Metalle einschliesst.

Bevorzugt umfasst der Metallkatalysator **K** eine Bismut-Verbindung, insbesondere eine Bismut(III)-Verbindung. Eine Bismut-Verbindung hat den Vorteil, dass sie, neben den erwünschten Eigenschaften als Katalysator und Thiokomplex-Bildner, eine geringe Akuttoxizität besitzt.

Als Bismut-Verbindung kann eine Vielzahl von herkömmlichen Bismut-Katalysatoren verwendet werden. Dabei handelt es sich beispielsweise um Bismutcarboxylate wie z.B. Bismut-Acetat, -Oleat, -Octoat oder -Neodecanoat, Bismutnitrat, Bismuthalogenide wie z.B. Bromid, Chlorid, Iodid, Bismutsulfid, basische Bismutcarboxylate wie z.B. Bismutyl-neodecanoat, Bismut-subgallat oder Bismut-subsalicylat, sowie Gemische davon.

In einer bevorzugten Ausführungsform ist der Metallkatalysator **K** ein Bismut(III)-Komplex, der mindestens einen Liganden auf 8-Hydroxychinolinbasis aufweist. Solche Komplexe sind beschrieben in der EP 1551895. Bevorzugt handelt es sich dabei um ein Bismut(III)-Carboxylat, das ein Moläquivalent eines 8-Hydroxychinolinliganden aufweist.

In einer weiteren bevorzugten Ausführungsform ist der Metallkatalysator **K** ein Bismut(III)-Komplex, der mindestens einen Liganden auf 1,3-Ketoamidbasis aufweist. Solche Komplexe sind beschrieben in der EP 2791153. Bevorzugt handelt es sich dabei um ein Bismut(III)-Carboxylat, das 1 bis 3 Moläquivalente eines 1,3-Ketoamidliganden aufweist.

Die erfindungsgemässe Zusammensetzung umfasst weiterhin zwischen 3 und 25 Gew.-%, bevorzugt zwischen 4 und 20 Gew.-%, besonders bevorzugt zwischen 5 und 20 Gew.-%, bezogen auf die gesamte Zusammensetzung, mindestens einer Art mikroskopischer Hohlkugeln **H.**

Die mikroskopischen Hohlkugeln **H** weisen dabei eine Druckfestigkeit, gemessen nach ASTM D3102-72, von mindestens 10 MPa, bevorzugt mindestens 15 MPa, auf. Die Druckfestigkeit kann mittels ASTM D3102-72 bestimmt werden. Eine detaillierte Methode für die Messung bevorzugter mikroskopischer Hohlkugeln **H** in Anlehnung an diese Industrienorm kann in WO 2012/033810, S. 15, zweiter Absatz, nachgelesen werden.

Wenn mikroskopische Hohlkugeln **H** mit einer Druckfestigkeit von unter 10 MPa verwendet werden ist nicht nur die Pumpbarkeit und die Dichtestabilität nach Pumpen bei der Herstellung oder Förderung der Zusammensetzung beeinträchtigt, sondern es wird überraschenderweise auch ein Material mit geringerer Festigkeit, rauerer Oberfläche, schlechterer Schleifbarkeit und schlechteren Applikationseigenschaften erhalten. Somit ist es für die Erfindung wesentlich, dass mikroskopische Hohlkugeln **H** mit einer Druckfestigkeit von mindestens 10 MPa verwendet werden.

Weiterhin weisen die mikroskopischen Hohlkugeln **H** eine Dichte (Schüttdichte) von mindestens 0.2 kg/L auf, bevorzugt mindestens 0.3 kg/L, insbesondere mindestens 0.4 kg/L. Bei Verwendung von Hohlkugeln mit geringerer Dichte wird die Festigkeit der Zusammensetzung zu schwach und die Härte und Oberflächenbeschaffenheit der ausgehärteten Zusammensetzung genügen nicht mehr den Anforderungen als Spachtelmasse, insbesondere Holzspachtelmasse. Bevorzugt weisen die mikroskopischen Hohlkugeln **H** eine mittlere Partikelgrösse (volumenbasierter Medianwert D50) von höchstens 60 µm auf, bevorzugt höchstens 45 µm, insbesondere höchstens 30 µm, gemessen mittels Laserdiffraktion. Solche Hohlkugeln erzeugen eine besonders gut für Spachtelmassen geeignete, besonders gut schleifbare Oberfläche an der ausgehärteten Zusammensetzung, welche nach dem Schliff eine besonders glatte, gleichmässige Oberfläche aufweist. Bei Verwendung von Hohlkugeln mit viel grösserer Partikelgrösse, beispielsweise über 200 µm, kann es vorkommen, dass die Oberfläche nach dem Schliff Unebenheiten aufweist.

Die mikroskopischen Hohlkugeln **H** sind im Wesentlichen sphärische Körper umfassend eine Hülle und Gas im Innenraum. Das Gas kann beispielsweise Luft, CO₂, Stickstoff, Sauerstoff, Wasserstoff, ein Edelgas oder Mischungen dieser Gase sein. Die Hülle kann beispielsweise aus Glas, insbesondere Borsilikatglas, Silikaten oder aus anderen Materialien gefertigt sein.

Bevorzugt sind die mikroskopischen Hohlkugeln **H** aus Glas, insbesondere Borsilikatglas, wobei die mikroskopischen Hohlkugeln **H** bevorzugt weiss oder farblos sind. Diese ermöglichen neben idealen mechanischen Eigenschaften auch eine vielfältige Einfärbung der Polyurethanzusammensetzung, was aus ästhetischen Gründen bei sichtbaren Verspachtelungen vorteilhaft ist.

Geeignete mikroskopische Hohlkugeln **H** aus Glas und deren Herstellung werden beispielsweise in US 8,261,577 und WO 2012/033810 gelehrt.

Bevorzugte geeignete, kommerziell erhältliche mikroskopischen Hohlkugeln **H** aus Glas sind 3M^{™} Glass Bubbles, erhältlich von 3M Deutschland GmbH. Dabei sind insbesondere bevorzugt die Typen S60, K37, iM16K sowie S28HS.

Die mikroskopischen Hohlkugeln **H** liegen bevorzugt in Komponente **B** vor. In diesem Fall enthält Komponente **B** bevorzugt 6 bis 50 Gew.-%, bevorzugt 7 bis 40 Gew.-%, insbesondere 8 bis 30 Gew.-%, mikroskopische Hohlkugeln **H,** bezogen auf Komponente **B.**

Die erfindungsgemässe Zusammensetzung umfasst weiterhin zwischen 2.5 und 7.5 Gew.-%, bevorzugt zwischen 3 und 6 Gew.-%, bezogen auf die gesamte Zusammensetzung, mindestens eines Trocknungsmittels **D,** wobei das Trocknungsmittel **D** ein Alumosilikat ist.

Das Trocknungsmittel **D** ist wichtig insbesondere für die Anwendung als Holzspachtelmasse oder auf anderen feuchtigkeitshaltigen Substraten, da Restfeuchte beispielsweise im Holz die Aushärtung der Polyurethanzusammensetzung stören kann und zu Blasenbildung oder mangelnder Aushärtung besonders in dünnen Schichten führt. Überraschenderweise wurde experimentell gefunden, dass einzig Alumosilikat-Trocknungsmittel für die vorliegende Erfindung geeignet sind. Reaktive Silane oder Isocyanate, wie sie sonst als Trocknungsmittel in Polyurethanzusammensetzungen eingesetzt werden, führen zu einer Verschlechterung der Topfzeit während der Applikation und/oder der Schleifbarkeit nach der Aushärtung.

Es ist ebenfalls nötig, dass mindestens 2.5 Gew.-% an Trocknungsmittel **D,** bezogen auf die gesamte Polyurethanzusammensetzung, enthalten sind, um eine gewünschte Verarbeitbarkeit und Schleifbarkeit zu erhalten. Eine Menge über 7.5 Gew.-%, bezogen auf die gesamte Zusammensetzung, verkürzt die Offenzeit und ist daher nicht empfohlen.

Geeignet als Trocknungsmittel **D** sind alle als Trocknungsmittel einsetzbaren Alumosilikate, so z.B. Molekularsiebe oder Zeolithe.

Bevorzugt ist das Trocknungsmittel **D** ein Molekularsieb mit einer Porengrösse von mindestens 2.5 Å.

Das Trocknungsmittel **D** liegt bevorzugt in Komponente **B** vor. In diesem Fall enthält Komponente **B** bevorzugt 5 bis 15 Gew.-%, bevorzugt 8 bis 14 Gew.-%, insbesondere 9 bis 13 Gew.-%, Trocknungsmittel **D,** bezogen auf Komponente **B.**

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Aluminiumoxide, Aluminiumhydroxide, Magnesiumhydroxid, Kieselsäuren inklusive hochdisperse Kieselsäuren aus Pyrolyseprozessen und deren hydrophobierten Varianten, industriell hergestellte Russe, Graphit, Metallpulver wie Aluminium, Kupfer, Eisen, Silber oder Stahl, PVC-Pulver oder Hohlkugeln, sowie flammhemmende Füllstoffe, wie Hydroxide oder Hydrate, insbesondere Hydroxide oder Hydrate von Aluminium, bevorzugt Aluminiumhydroxid.

Die Zugabe von Füllstoffen ist dahingehend von Vorteil, dass dadurch die Festigkeit der ausgehärteten Polyurethanzusammensetzung erhöht wird. Bevorzugt enthält die Polyurethanzusammensetzung mindestens einen Füllstoff ausgewählt aus der Gruppe bestehend aus Calciumcarbonat, Russ, Kaolin, Baryt, Talk, Quarzmehl, Dolomit, Wollastonit, Kaolin, calciniertes Kaolin und Glimmer (Mica). Als Füllstoffe besonders bevorzugt sind gemahlene Calciumcarbonate, calcinierte Kaoline oder Russ.

Es ist kann von Vorteil sein, eine Mischung verschiedener Füllstoffe einzusetzen. Am meisten bevorzugt sind Kombinationen von gemahlenen Calciumcarbonaten oder calcinierten Kaolinen und Russ.

Der Gehalt an Füllstoff **F** in der Zusammensetzung liegt bevorzugt im Bereich von 5 Gew.-% bis 50 Gew.-%, insbesondere 10 Gew.-% bis 40 Gew.-%, besonders bevorzugt 15 Gew.-% bis 30 Gew.-%, bezogen auf die gesamte Zusammensetzung.

Als weitere Bestandteile können weiterhin insbesondere Lösungsmittel, Weichmacher und/oder Extender, Pigmente, Rheologiemodifizierer wie insbesondere amorphe Kieselsäuren, Trocknungsmittel wie insbesondere Zeolithe, Haftvermittler wie insbesondere organofunktionelle Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Die Polyurethanzusammensetzung enthält bevorzugt weniger als 0.5 Gew.-%, insbesondere weniger als 0.1 Gew.-%, bezogen auf die gesamte Zusammensetzung, an Carbonsäuren, da diese die Aushärtung beeinträchtigen können. Allenfalls durch den Metallkatalysator eingebrachte Carboxylatliganden zählen hierbei nicht zu den gemeinten Carbonsäuren.

Eine bevorzugte Polyurethanzusammensetzung enthält eine erste Komponente **A,** welche, jeweils bezogen auf Komponente **A,**
- 30 bis 90 Gew.-%, bevorzugt 40 bis 80 Gew.-%, insbesondere 50 bis 70 Gew.-%, Polyol **A1,**
- 5 bis 25 Gew.-%, bevorzugt 10 bis 20 Gew.-%, insbesondere 12 bis 18 Gew.-%, Diol **A2,**
- 0.25 bis 5 Gew.-%, bevorzugt 1 bis 3 Gew.-%, insbesondere 1.5 bis 2 Gew.-%, einer Verbindung **T,** die mindestens eine Thiolgruppe aufweist,
- 0.05 bis 2 Gew.-%, bevorzugt 0.1 bis 1.5 Gew.-%, insbesondere 0.3 bis 1 Gew.-%, eines Metallkatalysators **K,** und
- 10 bis 50 Gew.-%, bevorzugt 15 bis 40 Gew.-%, insbesondere 20 bis 30 Gew.-%, Füllstoffe,
sowie gegebenenfalls weitere Bestandteile enthält.

Eine bevorzugte Polyurethanzusammensetzung enthält eine zweite Komponente **B,** welche, jeweils bezogen auf Komponente **B,**
- 30 bis 80 Gew.-%, bevorzugt 40 bis 70 Gew.-%, insbesondere 50 bis 70 Gew.-%, Polyisocyanat **I,**
- 5 bis 15 Gew.-%, bevorzugt 8 bis 14 Gew.-%, insbesondere 9 bis 13 Gew.- %, Trocknungsmittel **D,**
- 6 bis 50 Gew.-%, bevorzugt 7 bis 40 Gew.-%, insbesondere 8 bis 30 Gew.- %, mikroskopische Hohlkugeln **H,** und
- 0 bis 40 Gew.-%, bevorzugt 10 bis 30 Gew.-%, insbesondere 15 bis 25 Gew.-%, Füllstoffe,
sowie gegebenenfalls weitere Bestandteile enthält.

Eine bevorzugte zweikomponentige Polyurethanzusammensetzung besteht aus den beiden ebengenannten bevorzugten Komponenten **A** und **B.**

Die erste und die zweite Komponente werden in allen Ausführungsformen vorteilhaft so formuliert, dass ihr Mischungsverhältnis in Gewichtsteilen im Bereich von 5:1 bis 1:5 bevorzugt zwischen 3:1 und 1:3, besonders bevorzugt zwischen 2:1 und 1:2, liegt.

Die erste und die zweite Komponente werden in allen Ausführungsformen vorteilhaft so formuliert, dass ihr Mischungsverhältnis in Volumenteilen im Bereich von 5:1 bis 1:5, bevorzugt zwischen 3:1 und 1:3, besonders bevorzugt zwischen 2:1 und 1:2, liegt.

In der vermischten Polyurethanzusammensetzung liegt das molare Verhältnis zwischen der Anzahl Isocyanatgruppen und der Anzahl gegenüber Isocyanaten reaktiven Gruppen, insbesondere Hydroxylgruppen der Polyole, vor der Aushärtung im Bereich von 0.9 : 1 - 1.4 : 1, bevorzugt 1.05 : 1 - 1.3 : 1.

Die Polyurethanzusammensetzung ist direkt nach Mischen der Komponenten **A** und **B** bei 23 °C bevorzugt fliessfähig, insbesondere selbstnivellierend. Das bedeutet, dass sie als selbstständig hohlraumfüllende Masse eingesetzt werden kann und Hohlräume vollständig oder nahezu vollständig ausfüllen kann. Es ist möglich und kann sinnvoll sein, dass die Zusammensetzung eine leichte Thixotropie aufweist. In einigen bevorzugten Ausführungsformen ist die Zusammensetzung nach Mischen selbstnivellierend.

Die Polyurethanzusammensetzung besitzt direkt nach Mischen der Komponenten **A** und **B** bevorzugt eine Viskosität, gemessen bei 20°C auf einem Platten-Platten Viskosimeter mit Plattenabstand 1 mm und Plattendurchmesser 25 mm, von < 5000 Pa·s, bevorzugt < 4000 Pa·s, bei einer Scherrate von 0.01 s⁻¹ und < 500 Pa·s, bevorzugt < 200 Pa·s, bei einer Scherrate von 1 s⁻¹ und < 50 Pa·s, bevorzugt < 30 Pa·s, bei einer Scherrate von 10 s⁻¹.

Die Viskosität kann durch Formulierungsmassnahmen, beispielsweise der Auswahl der Polyole und/oder Füllstoffe und den Einsatz von niedrigviskosen Zusätzen wie Weichmachern durch Routineversuche eingestellt werden.

Die Herstellung der beiden Komponenten erfolgt getrennt voneinander und vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente beziehungsweise die zweite Komponente der Zusammensetzung enthält.

Das Mischen erfolgt typischerweise über Statikmischer oder mit Hilfe von dynamischen Mischern. Beim Mischen ist möglichst darauf zu achten, dass die beiden Komponenten möglichst homogen vermischt werden. Werden die zwei Komponenten unvollständig gemischt, können lokale Abweichungen vom vorteilhaften Mischungsverhältnis auftreten, was sich in einer Verschlechterung der mechanischen Eigenschaften auswirken kann.

Beim Kontakt der ersten Komponente mit der zweiten Komponente beginnt, nach der Latenzzeit des Katalysators durch die Reaktion mit den Thiolen der Verbindung **T,** die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Somit ist die beschriebene Polyurethanzusammensetzung vorteilhaft verwendbar als Spachtelmasse, insbesondere als Spachtelmasse für das Verfüllen von Spalten, Hohlräumen, Löcher, Rissen und Fugen, insbesondere für Holz.

Die Polyurethanzusammensetzung wird weiter vorzugsweise als Spachtelmasse insbesondere als Holzspachtelmasse, eingesetzt. In einem weiteren Aspekt umfasst die Erfindung daher die Verwendung einer zweikomponentigen Polyurethanzusammensetzung als Spachtelmasse, insbesondere als Spachtelmasse zur Oberflächenglättung von Holz.

In einem weiteren Aspekt umfasst die Erfindung daher ein Verfahren zum Glätten einer Oberfläche durch Ausfüllen von Hohlräumen, Rissen, Löchern und Spalten in einem Substrat, insbesondere einem Holzsubstrat, umfassend die Schritte
a) Mischen der ersten Komponente **A** und der zweiten Komponente **B** einer zweikomponentigen Polyurethanzusammensetzung wie vorgängig beschrieben;
b) Ausspachteln der zu verfüllenden Hohlräume, Risse, Löcher oder Spalten auf der Oberfläche des Substrates mit der gemischten Polyurethanzusammensetzung innerhalb deren Topfzeit;
c) Optional anpressen der in Schritt b) applizierten Polyurethanzusammensetzung auf das Substrat und/oder in die Hohlräume, Risse, Löcher oder Spalten auf der Oberfläche des Substrates mittels einer bevorzugt beheizten Walze oder Presse;
d) Aushärten der verfüllten, gemischten Polyurethanzusammensetzung in den Hohlräumen, Rissen, Löcher oder Spalten auf der Oberfläche des Substrates;
e) Glätten der ausgespachtelten Substratoberfläche mittels Schleifen, Abrieb oder Absanden.

Schritt c) ist optional, aber bevorzugt beispielsweise für das Bearbeiten von grösseren Holzsubstraten in industriellen Prozessen. Dadurch kann die Ausspachtelung oder Ausfüllung der Hohlräume, Risse, Löcher oder Spalten auf der Oberfläche des Substrates noch effizienter durchgeführt werden und die Verwendung einer beheizten Walze oder Presse hat den zusätzlichen Vorteil, dass die Zusammensetzung noch schneller aushärtet, was noch kürzere Taktzeiten ermöglicht.

In diesen Verfahren sind geeignete Substrate insbesondere:
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, umfassend Naturhölzer oder Holz behandelt mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Asphalt, Mörtel, Ziegel, Gips und Natursteine wie Granit, Kalk- und Standstein oder Marmor.

Als Substrate besonders geeignet sind Beton, Natursteine, Kunststoff, Holz, Glas, Keramik und faserverstärkte Kunststoffe, insbesondere Holz und faserverstärkte Kunststoffe. Am meisten geeignet und bevorzugt sind Holz oder holzbasierte Werkstoffe wie beispielsweise Holz behandelt mit Harzen, beispielsweise Phenol-, Melamin- oder Epoxidharzen, gebundene Holzwerkstoffe, Harz-Textil-Verbundwerkstoffe und weitere sogenannte Holz-Polymer-Composites.

Nach der Auftragung der erfindungsgemässen Polyurethanzusammensetzung mittels obengenanntem Verfahren härtet diese sehr rasch zu einer hochfesten, hartelastischen Masse mit einer Shore D Härte von mindestens 60 und einer homogenen, trockenen Oberfläche aus.

Ein wesentlicher Vorteil der erfindungsgemässen Polyurethanzusammensetzung ist eine ausreichend lange Topfzeit, welche eine problemlose Anwendung ermöglicht, gefolgt von einer ausserordentlich raschen Aushärtung und Schleifbarkeit. Dadurch werden nicht nur Ausspachtelungen mit aussergewöhnlich raschen Takt- und Verarbeitungszeiten ermöglicht, sondern zudem auch mit aussergewöhnlich guten mechanischen Eigenschaften.

Die Taktzeit, besonders in automatisierten Ausspachtelungsprozessen kann noch weiter erhöht werden, indem die applizierte Polyurethanzusammensetzung erwärmt wird, beispielsweise mittels einer beheizten Produktionslinie oder einer beheizten Walze oder Presse, welche zusätzlich durch Druck auf die applizierte Polyurethanzusammensetzung noch die Verfüllung enger Hohlräume, Ritzen oder dergleichen verbessert. Die Erwärmung beschleunigt die Aushärtungsreaktion zusätzlich, wobei bereits Temperaturen von 40°C bis 60°C oder höher aushärtungsbeschleunigend wirken, ohne das Substrat thermisch zu beeinträchtigen.

Nach Aushärtung ist die Zusammensetzung problemlos schleifbar, beispielsweise mittels Sandstrahlen oder anderer geeigneter Schleifmethoden, die für alle Substrate dem Fachmann bekannt sind. Die Zusammensetzung ist prinzipiell mit jeder Schleiftechnik schleifbar. Das Substrat, bevorzugt Holz, kann mit derselben Schleifanwendung abgetragen werden und es resultiert eine glatte, bezüglich Druck- und Zugfestigkeit homogene Oberfläche.

Für optische oder ästhetische Bedürfnisse kann die erfindungsgemässe Polyurethanzusammensetzung auch eingefärbt werden, beispielsweise mit Pigmenten oder Farbstoffen.

In einem weiteren Aspekt umfasst die Erfindung daher auch einen Artikel, dessen Oberfläche nach dem vorgehend beschriebenen Verfahren geglättet wurde.

### Beispiele

**Tabelle 1: Verwendete Substanzen**

| | |
|---|---|
| Voranol CP 4755 | Voranol^{®} CP 4755 (Dow Chemical); Polyethertriol, CAS Nr. 9082-00-2; Mw: 5000 g/mol; OH-Zahl: 35 mg KOH/g |
| Lupranol 3422 | Lupranol^{®} 3422 (BASF); Höherfunktionelles Polyetherpolyol; OH-Zahl: 490 mg KOH/g |
| 1,5-Pentandiol | (Sigma Aldrich) |
| Thiocure GDMP | Thiocure^{®} GDMP (Bruno Bock Thiochemicals); Glycol-di(3-mercaptopropionat) |
| Desmodur CD-S | Desmodur^{®} CD-S (Covestro); modifiziertes Diphenylmethan-4,4'diisocyanat (MDI); NCO-Gehalt: 29.5 Gew.-% |
| Glass Bubbles iM16K | 3M^{™} Glass Bubbles iM16K (3M); Weisse Hohlkugeln aus Borosilikatglas; Dichte: 0.46 kg/m3; Druckfestigkeit (ASTM D3102-72): 110.3 MPa (mikroskopische Hohlkugeln **H**) |
| Sylosiv A3 | Sylosiv^{®} A3 (W.R: Grace); micronisiertes Molekularsieb (Alumosilicat); Porengrösse: 3 Å (Trocknungsmittel **D**) |
| Monarch 570 | Monarch^{®} 570 (Cabot Corp.); Russ (Füllstoff) |
| Whitetex | Satintone^{®} W (Whitetex) (BASF); calciniertes Kaolin (Füllstoff) |
| HDK H18 | HDK^{®} H18 (Wacker); hydrophobe pyrogene Kieselsäure (Füllstoff) |
| Omyacarb 5-GU | Omyacarb^{®} 5-GU (Omya); gemahlene, natürliche Kreide (Füllstoff) |
| Bi-Kat. (2.68 mmol Bi /g) | 35 Gew.-% Coscat 83 (Organobismut-Katalysator; Coscat^{®} 83 (Vertellus Specialties Inc.)) in Weichmacher mit 1 Moläquivalent 8-Hydroxychinolin (bezogen auf Bi) |
| Sn-Kat. | Dibutylzinndilaurat (Sigma Aldrich) |

### Herstellung von Polyurethanzusammensetzungen

Für jede Zusammensetzung wurden die in der Tabelle 2 angegebenen Inhaltsstoffe in den angegebenen Mengen (in Gewichtsteilen) der ersten Komponente A mittels eines Vakuumdissolvers unter Feuchtigkeitsausschluss zu einer homogenen Paste verarbeitet und aufbewahrt. Ebenso wurden die in den Tabellen angegebenen Inhaltsstoffe der zweiten Komponente B verarbeitet und aufbewahrt. Anschliessend wurden die beiden Komponenten mittels eines SpeedMixers^{®} (DAC 150 FV, Hauschild) während 30 Sekunden zu einer homogenen Paste verarbeitet und diese unverzüglich folgendermassen geprüft:

### Prüfung der Beispielzusammensetzungen

Die **Shore** D-Härte wurde nach DIN 53505 bestimmt an Probekörpern, die während 7 Tagen bei 23°C und 50% relativer Luftfeuchtigkeit (Normklima) mit einer Schichtdicke von 4 mm ausgehärtet wurden. Die genaue Lagerungszeit (Aushärtungszeit) bis zur jeweiligen Messung ist in der Tabelle 3 angegeben. Die **Wartezeit bis schleifbar** wurde bestimmt, indem die Zeit in Minuten gemessen wurde, bis die Oberfläche von Prüfkörpern hergestellt nach ASTM D4060 - 19 aus der zu prüfenden gemischten zweikomponentigen Zusammensetzung durch die Aushärtung im Normklima so weit getrocknet war, dass sie abgeschliffen werden konnten. Die **Schleifbarkeit nach Aushärtung** wurde beurteilt, indem das Resultat des Abschliffs optisch und haptisch beurteilt wurde. Glatte, trockene, genügend harte und homogen geschliffene Oberflächen wurden als «sehr gut» eingestuft. Bei nicht idealen Ergebnissen (beobachtete Inhomogenitäten oder ungenügende Härte) wurde die Beurteilung entsprechend mit «gut», «schlecht» oder «sehr schlecht» eingestuft.

Die **Topfzeit** wurde in einem Viskosimeter gemessen als Zeit, bis die Viskosität nach Mischen der beiden Komponenten 500 Pa·s betrug. Die Messung der Viskosität erfolgte auf einem Platten-Platten Rheometer MCR 302 (Firma Anton Paar) mit einem Plattendurchmesser von 25 mm und einem Plattenabstand von 1 mm bei einer Frequenz von 0.1 s⁻¹ und einer Temperatur von 20°C. Dazu wurden die beiden Komponenten zunächst während 30 sec in einem Speedmixer (Firma Hauschild) gemischt und sofort für die Messung auf die Platten aufgebracht.

**Tabelle 2: Hergestellte Beispielzusammensetzungen C-1 bis C-4.**

| **Beispiel** | **C-1** (Ref.) | **C-2** (Ref.) | **C-3** | **C-4** (Ref.) |
|---|---|---|---|---|
| Erste Komponente **A** (Mengen in Gewichtsteilen) | | | | |
| Voranol CP 4755 | 50.5 | 50.5 | 50.5 | 50.5 |
| Lupranol 3422 | 3.0 | 3.0 | 3.0 | 3.0 |
| 1,5-Pentandiol | 17.0 | 17.0 | 17.0 | 17.0 |
| Thiocure GDMP | 2.4 | 2.4 | 2.4 | 2.4 |
| Bi-Kat. (2.68 mmol Bi /g) | 0.6 | 0.6 | 0.6 | 0.6 |
| HDK H18 | 6.0 | 6.0 | 6.0 | 6.0 |
| Omyacarb 5-GU | 20.5 | 20.5 | 20.5 | 20.5 |
| *TOTAL* | *100* | *100* | *100* | *100* |

| Zweite Komponente **B** (Mengen in Gewichtsteilen) | | | | |
|---|---|---|---|---|
| Desmodur CD-S | 60.0 | 60.0 | 60.0 | 60.0 |
| HDK H18 | 6.0 | 6.0 | 6.0 | 6.0 |
| Monarch 570 | 4.0 | 4.0 | 4.0 | 4.0 |
| Whitetex | 17.5 | 20.0 | 7.5 | 30.0 |
| Glass Bubbles iM16K | 12.5 | - | 12.5 | - |
| Sylosiv A3 | - | 10.0 | 10.0 | - |
| *TOTAL* | *100* | *100* | *100* | *100* |

| Mischung **A** und **B** | | | | |
|---|---|---|---|---|
| Mischverhältnis (Gewicht) **A : B** | 1 : 1 | 1 : 1 | 1 : 1 | 1 : 1 |

**Tabelle 3: Eigenschaften der Beispielzusammensetzungen und Eignung als Holzspachtelmasse.**

| **Zusammensetzung** | **C-1** (Ref.) | **C-2** (Ref.) | **C-3** | **C-4** (Ref.) |
|---|---|---|---|---|
| Topfzeit (Verarbeitungszeit) | Verkürzt | Verlängert | Optimal und einstellbar | Optimal und einstellbar |
| Oberfläche nach Aushärtung | Hart, in dünnen Schichten klebrig | Weich und trocken | Hart und trocken | Weich, in dünnen Schichten klebrig |
| Schleifbarkeit nach Aushärtung | Gut | Schlecht | Sehr gut | Sehr schlecht |
| Wartezeit bis schleifbar | 35 min | 23 min | 23 min | 35 min |
| Shore D Härte | 62 | 40 | 60 | 25 |

Tabelle 3 zeigt, dass einzig die Zusammensetzung C-3 sowohl eine genügend hohe Härte, eine genügend lange und einstellbare Topfzeit und eine genügend kurze Wartezeit bis sie schleifbar ist, aufweist. Zudem ist sie sehr gut schleifbar. Zusammensetzung C-4 ist zwar sehr gut applizierbar (lange, einstellbare Topfzeit), aber die Schleifbarkeit und die Wartezeit bis schleifbar sind schlecht und das Material nach Aushärtung zu weich.

Zusammensetzung C-1 ist gut schleifbar und weist eine gute Härte auf. Allerdings ist die Wartezeit bis schleifbar zu lang und die Applikation wegen verkürzter Topfzeit beeinträchtigt.

Zusammensetzung C-2 zeigt eine ungünstige Verlängerung der Topfzeit, was die Taktzeiten beeinträchtigt und die Zusammensetzung ist nach Aushärtung zu weich und schlecht schleifbar.

### Vergleichsversuche mit anderen Trocknungsmitteln und anderen mikroskopischen Hohlkugeln

Es wurden eine Reihe von Zusammensetzungen hergestellt, die den Einfluss der erfindungsgemässen Trocknungsmittel **D** und mikroskopischen Hohlkungeln **H** zeigen sollen.

### Zusammensetzung C-5 (Ref.)

Zusammensetzung C-5 entspricht der Zusammensetzung C-3 wie oben beschrieben, mit dem einzigen Unterschied, dass anstatt von Sylosiv A3 als Trocknungsmittel 10 Gewichtsteile Dynasylan^{®} A (Tetraethoxysilan; von Evonik) in Komponente **B** eingesetzt wurden. Im Vergleich zu Zusammensetzung C-3 verkürzte sich bei C-5 die Topfzeit, und die Wartezeit bis schleifbar verlängerte sich auf 30 min.

### Zusammensetzung C-6 (Ref.)

Zusammensetzung C-6 entspricht der Zusammensetzung C-3 wie oben beschrieben, mit dem einzigen Unterschied, dass anstatt von Sylosiv A3 als Trocknungsmittel 10 Gewichtsteile Calciumoxid in Komponente **B** eingesetzt wurden. Im Vergleich zu Zusammensetzung C-3 verkürzte sich bei C-6 die Topfzeit massiv und das Material war nicht mehr verarbeitbar.

### Zusammensetzung C-7 (Ref.)

Zusammensetzung C-7 entspricht der Zusammensetzung C-3 wie oben beschrieben, mit dem einzigen Unterschied, dass anstatt von Glass Bubbles iM16K als mikroskopische Hohlkugeln 12.5 Gewichtsteile Omyasphere^{®} 220 (Dichte: 0.27 kg/L; Druckfestigkeit (ASTM D3102-72): 2.5 MPa; von Omya) in Komponente **B** eingesetzt wurden. Im Vergleich zu Zusammensetzung C-3 zeigte Zusammensetzung C-7 eine raue, schlecht schleifbare Oberfläche nach Aushärtung.

## Patentansprüche

1. Polyurethanzusammensetzung bestehend aus einer ersten Komponente **A** und einer zweiten Komponente **B;** wobei
- die erste Komponente **A**
- mindestens ein Polyol **A1** mit einer OH-Funktionalität im Bereich von 1.5 bis 4 und einem mittleren Molekulargewicht (Zahlenmittel) Mₙ, gemessen mittels GPC gegen Polystyrol, im Bereich von >500 bis 15'000 g/mol, und
- mindestens ein Polyol **A2** mit einer OH-Funktionalität im Bereich von 2 bis 6 und einem mittleren Molekulargewicht (Zahlenmittel) Mₙ, gemessen mittels GPC gegen Polystyrol, im Bereich von 50 bis 500 g/mol, und
- mindestens eine Verbindung **T,** die mindestens eine Thiolgruppe aufweist, umfasst; und
- die zweite Komponente **B**
- mindestens ein Polyisocyanat **I** umfasst;
wobei in einer der Komponenten zusätzlich mindestens ein Metallkatalysator **K** für die Reaktion von Hydroxylgruppen und Isocyanatgruppen enthalten ist, der Thiokomplexe bilden kann;
und wobei das molare Verhältnis aller Thiolgruppen der mindestens einen Verbindung **T** zu allen Metallatomen des mindestens einen Metallkatalysators **K** zwischen 5 : 1 und 100 : 1 liegt;
und wobei das molare Verhältnis aller NCO-Gruppen der Polyisocyanate I zu allen OH-Gruppen der Polyole **A1** und **A2** = 0.9 : 1 - 1.4 : 1, insbesondere 1.05 : 1 - 1.3 : 1, beträgt;
und wobei die Zusammensetzung in wenigstens einer der beiden Komponenten zwischen 3 und 25 Gew.-%, bezogen auf die gesamte Zusammensetzung, mindestens einer Art mikroskopischer Hohlkugeln **H** enthält, wobei die mikroskopischen Hohlkugeln **H** eine Druckfestigkeit, gemessen nach ASTM D3102-72, von mindestens 10 MPa aufweisen und eine Dichte von mindestens 0.2 kg/L aufweisen;
und wobei die Zusammensetzung in wenigstens einer der beiden Komponenten zwischen 2.5 und 7.5 Gew.-%, bezogen auf die gesamte Zusammensetzung, mindestens eines Trocknungsmittels **D** enthält, wobei das Trocknungsmittel **D** ein Alumosilikat ist.

2. Polyurethanzusammensetzung gemäss Anspruch 1, **dadurch gekennzeichnet, dass** der Metallkatalysator **K** eine Bismut(III)-Verbindung umfasst, bevorzugt ein Bismut(III)-carboxylat.

3. Polyurethanzusammensetzung gemäss einem der Ansprüche 1 oder 2, **dadurch gekennzeichnet, dass** das Diol **A2** ausgewählt ist aus der Gruppe bestehend aus 1,3-Butandiol, 1,4-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol, 1,2-Hexandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

4. Polyurethanzusammensetzung gemäss einem der vorhergehenden Ansprüche, **dadurch gekennzeichnet, dass** die mindestens eine Verbindung **T** eine Polythiolverbindung mit 2 bis 6 Thiolgruppen oder ein Mercaptosilan umfasst.

5. Polyurethanzusammensetzung gemäss Anspruch 4, **dadurch gekennzeichnet, dass** die mindestens eine Verbindung **T** ausgewählt ist aus der Gruppe bestehend aus Ethylenglykol-di(3-mercaptopropionat), 1,8-Dimercapto-3,6-dioxaoctane, Ethylenglykol-dimercaptoacetat, Dipentaerythritol-hexa(3-mercaptopropionat) und 3-Mercaptopropyltrimethoxysilan.

6. Polyurethanzusammensetzung gemäss einem der vorhergehenden Ansprüche, **dadurch gekennzeichnet, dass** der Metallkatalysator **K** in der ersten Komponente **A** enthalten ist.

7. Polyurethanzusammensetzung gemäss einem der vorhergehenden Ansprüche, **dadurch gekennzeichnet, dass** das Polyol **A1** mindestens ein Polyetherpolyol umfasst.

8. Polyurethanzusammensetzung gemäss einem der vorhergehenden Ansprüche, **dadurch gekennzeichnet, dass** das Polyisocyanat **I** eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten, insbesondere Carbodiimiden, ist.

9. Polyurethanzusammensetzung gemäss einem der vorgehenden Ansprüche, **dadurch gekennzeichnet, dass** die zweite Komponente **B** ein Isocyanatgruppen aufweisendes Polyurethanpolymer enthält.

10. Polyurethanzusammensetzung gemäss einem der vorgehenden Ansprüche, **dadurch gekennzeichnet, dass** die mikroskopischen Hohlkugeln **H** hohle Glaskugeln umfassen, die bevorzugt weiss oder farblos sind.

11. Polyurethanzusammensetzung gemäss einem der vorgehenden Ansprüche, **dadurch gekennzeichnet, dass** das Trocknungsmittel **D** ein Molekularsieb mit einer Porengrösse von mindestens 2.5 Å umfasst.

12. Polyurethanzusammensetzung gemäss einem der vorgehenden Ansprüche, **dadurch gekennzeichnet, dass** das Mischungsverhältnis in Volumenteilen zwischen der ersten und der zweiten Komponente im Bereich von 5:1 bis 1:5, insbesondere 3:1 bis 1:3, besonders bevorzugt 2:1 bis 1:2 liegt.

13. Verwendung einer Polyurethanzusammensetzung gemäss einem der Ansprüche 1 bis 12 als Spachtelmasse, insbesondere als Spachtelmasse zur Oberflächenglättung von Holz.

14. Verfahren zum Glätten einer Oberfläche durch Ausfüllen von Hohlräumen, Rissen, Löchern und Spalten in einem Substrat, insbesondere einem Holzsubstrat, umfassend die Schritte
a) Mischen der ersten Komponente **A** und der zweiten Komponente **B** einer zweikomponentigen Polyurethanzusammensetzung gemäss einem der Ansprüche 1 bis 10,
b) Ausspachteln oder ausfüllen der zu verfüllenden Hohlräume, Risse, Löcher oder Spalten auf der Oberfläche des Substrates mit der gemischten Polyurethanzusammensetzung innerhalb deren Topfzeit;
c) Optional anpressen der in Schritt b) applizierten Polyurethanzusammensetzung auf das Substrat und/oder in die Hohlräume, Risse, Löcher oder Spalten auf der Oberfläche des Substrates mittels einer bevorzugt beheizten Walze oder Presse;
d) Aushärten der verfüllten, gemischten Polyurethanzusammensetzung in den Hohlräumen, Rissen, Löcher oder Spalten auf der Oberfläche des Substrates;
e) Glätten der ausgespachtelten Substratoberfläche mittels Schleifen, Abrieb oder Absanden.

## Claims

1. Polyurethane composition consisting of a first component A and a second component B; wherein
- the first component A comprises
- at least one polyol A1 having an OH functionality in the range from 1.5 to 4 and a mean molecular weight (number average) Mₙ, measured by means of GPC against polystyrene, in the range from > 500 to 15'000 g/mol, and
- at least one polyol A2 having an OH functionality in the range from 2 to 6 and a mean molecular weight (number average) Mₙ, measured by means of GPC against polystyrene, in the range from 50 to 500 g/mol, and
- at least one compound T that has at least one thiol group; and
- the second component B comprises
- at least one polyisocyanate I;
wherein one of the components additionally comprises at least one metal catalyst K for the reaction of hydroxyl groups and isocyanate groups that is able to form thio complexes;
and wherein the molar ratio of all the thiol groups in the at least one compound T to all metal atoms in the at least one metal catalyst K is between 5 : 1 and 100 : 1; and wherein the molar ratio of all NCO groups in the polyisocyanates I to all OH groups in the polyols A1 and A2 = 0.9 : 1 - 1.4 : 1, especially 1.05 : 1 - 1.3 : 1;
and wherein the composition, in at least one of the two components, contains between 3% and 25% by weight, based on the overall composition, of at least one type of hollow microspheres H, where the hollow microspheres H have a compressive strength measured to ASTM D3102-72 of at least 10 MPa and a density of at least 0.2 kg/L;
and wherein the composition, in at least one of the two components, contains between 2.5% and 7.5% by weight, based on the overall composition, of at least one desiccant D, where the desiccant D is an aluminosilicate.

2. Polyurethane composition according to Claim 1, **characterized in that** the metal catalyst K comprises a bismuth(III) compound, preferably a bismuth(III) carboxylate.

3. Polyurethane composition according to either of Claims 1 and 2, **characterized in that** the diol A2 is selected from the group consisting of butane-1,3-diol, butane-1,4-diol, butane-2,3-diol, 2-methylpropane-1,3-diol, pentane-1,2-diol, pentane-2,4-diol, 2-methylbutane-1,4-diol, 2,2-dimethylpropane-1,3-diol, hexane-1,2-diol, 3-methylpentane-1,5-diol, octane-1,2-diol, octane-3,6-diol, 2-ethylhexane-1,3-diol, 2,2,4-trimethylpentane-1,3-diol, 2-butyl-2-ethylpropane-1,3-diol, 2,7-dimethyloctane-3,6-diol, cyclohexane-1,4-diol, cyclohexane-1,3-dimethanol and cyclohexane-1,4-dimethanol.

4. Polyurethane composition according to any of the preceding claims, **characterized in that** the at least one compound T comprises a polythiol compound having 2 to 6 thiol groups, or a mercaptosilane.

5. Polyurethane composition according to Claim 4, **characterized in that** the at least one compound T is selected from the group consisting of ethylene glycol di(3-mercaptopropionate), 1,8-dimercapto-3,6-dioxaoctane, ethylene glycol dimercaptoacetate, dipentaerythritol hexa(3-mercaptopropionate), and 3-mercaptopropyltrimethoxysilane.

6. Polyurethane composition according to any of the preceding claims, **characterized in that** the metal catalyst K is present in the first component A.

7. Polyurethane composition according to any of the preceding claims, **characterized in that** the polyol A1 comprises at least one polyether polyol.

8. Polyurethane composition according to any of the preceding claims, **characterized in that** the polyisocyanate I is a form of diphenylmethane 4,4'-, 2,4'- or 2,2'-diisocyanate that is liquid at room temperature or any desired mixtures of these isomers (MDI) in the form of polymeric MDI or MDI containing proportions of oligomers or derivatives, in particular carbodiimides.

9. Polyurethane composition according to any of the preceding claims, **characterized in that** the second component B comprises a polyurethane polymer containing isocyanate groups.

10. Polyurethane composition according to any of the preceding claims, **characterized in that** the hollow microspheres H comprise hollow glass beads that are preferably white or colourless.

11. Polyurethane composition according to any of the preceding claims, **characterized in that** the desiccant D comprises a molecular sieve having a pore size of at least 2.5 Å.

12. Polyurethane composition according to any of the preceding claims, **characterized in that** the mixing ratio in parts by volume between the first and second components is in the range from 5:1 to 1:5, especially 3:1 to 1:3, more preferably 2:1 to 1:2.

13. Use of a polyurethane composition according to any of Claims 1 to 12 as filling compound, especially as filling compound for smoothing of a wood surface.

14. Method of smoothing a surface by filling cavities, fissures, holes and gaps in a substrate, especially a wood substrate, comprising the steps of
a) mixing the first component A and second component B of a two-component polyurethane composition according to any of Claims 1 to 10,
b) filling the cavities, fissures, holes or gaps to be filled on the surface of the substrate with the mixed polyurethane composition within the pot life thereof;
c) optionally pressing the polyurethane composition applied in step b) onto the substrate and/or into the cavities, fissures, holes or gaps on the surface of the substrate by means of a preferably heated roller or press;
d) curing the filled mixed polyurethane composition in the cavities, fissures, holes or gaps on the surface of the substrate;
e) smoothing the filled substrate surface by means of grinding, abrasion or sanding.

## Revendications

1. Composition de polyuréthane constituée par un premier composant A et un deuxième composant B ;
- le premier composant A comprenant
- au moins un polyol A1 présentant une fonctionnalité OH dans la plage de 1,5 à 4 et une masse moléculaire moyenne (moyenne en nombre) Mₙ, mesurée par CPG par rapport au polystyrène, dans la plage de >500 à 15 000 g/mole et
- au moins un polyol A2 présentant une fonctionnalité OH dans la plage de 2 à 6 et une masse moléculaire moyenne (moyenne en nombre) Mₙ, mesurée par CPG par rapport au polystyrène, dans la plage de 50 à 500 g/mole et
- au moins un composé T qui présente au moins un groupe thiol ; et
- le deuxième composant B comprenant
- au moins un polyisocyanate I ;
un des composants contenant en plus au moins un catalyseur métallique K pour la réaction de groupes hydroxyle et de groupes isocyanate, qui peut former des complexes thio ;
et le rapport molaire de tous les groupes thiol dudit au moins un composé T sur tous les atomes métalliques dudit au moins un catalyseur métallique K étant situé entre 5:1 et 100:1 ;
et le rapport molaire de tous les groupes NCO des polyisocyanates I sur tous les groupes OH des polyols A1 et A2 = 0,9:1-1,4:1, en particulier 1,05:1-1,3:1 ;
et la composition contenant, dans au moins l'un des deux composants, entre 3 et 25% en poids, par rapport à la composition totale, d'au moins un type de billes creuses microscopiques H, les billes creuses microscopiques H présentant une résistance à la compression, mesurée selon la norme ASTM D3102-72, d'au moins 10 MPa et une masse volumique d'au moins 0,2 kg/L ;
et la composition contenant, dans au moins l'un des deux composants, entre 2,5 et 7,5% en poids, par rapport à la composition totale, d'au moins un agent dessiccant D, l'agent dessiccant D étant un aluminosilicate.

2. Composition de polyuréthane selon la revendication 1, **caractérisée en ce que** le catalyseur métallique K comprend un composé du bismuth (III), de préférence un carboxylate de bismuth (III).

3. Composition de polyuréthane selon l'une des revendications 1 ou 2, **caractérisée en ce que** le diol A2 est choisi dans le groupe constitué par le 1,3-butanediol, le 1,4-butanediol, le 2,3-butanediol, le 2-méthyl-1,3-propanediol, le 1,2-pentanediol, le 2,4-pentanediol, le 2-méthyl-1,4-butanediol, le 2,2-diméthyl-1,3-propanediol, le 1,2-hexanediol, le 3-méthyl-1,5-pentanediol, le 1,2-octanediol, le 3,6-octanediol, le 2-éthyl-1,3-hexanediol, le 2,2,4-triméthyl-1,3-pentanediol, le 2-butyl-2-éthyl-1,3-propanediol, le 2,7-diméthyl-3,6-octanediol, le 1,4-cyclohexanediol, le 1,3-cyclohexanediméthanol et le 1,4-cyclohexanediméthanol.

4. Composition de polyuréthane selon l'une des revendications précédentes, **caractérisée en ce que** ledit au moins un composé T comprend un composé polythiol comprenant 2 à 6 groupes thiol ou un mercaptosilane.

5. Composition de polyuréthane selon la revendication 4, **caractérisée en ce que** ledit au moins un composé T est choisi dans le groupe constitué par le di(3-mercaptopropionate) d'éthylèneglycol, le 1,8-dimercapto-3,6-dioxaoctane, le dimercaptoacétate d'éthylèneglycol, l'hexa(3-mercaptopropionate) de dipentaérythritol et le 3-mercaptopropyltriméthoxysilane.

6. Composition de polyuréthane selon l'une des revendications précédentes, **caractérisée en ce que** le catalyseur métallique K est contenu dans le premier composant A.

7. Composition de polyuréthane selon l'une des revendications précédentes, **caractérisée en ce que** le polyol A1 comprend au moins un polyétherpolyol.

8. Composition de polyuréthane selon l'une des revendications précédentes, **caractérisée en ce que** le polyisocyanate I est une forme liquide à température ambiante du 4,4'-diisocyanate de diphénylméthane, de 2,4'-diisocyanate de diphénylméthane ou de 2,2'-diisocyanate de diphénylméthane et des mélanges quelconques de ces isomères (MDI) sous forme de MDI polymère ou de MDI présentant des proportions d'oligomères ou de dérivés, en particulier de carbodiimides.

9. Composition de polyuréthane selon l'une des revendications précédentes, **caractérisée en ce que** le deuxième composant B est un polymère de polyuréthane présentant des groupes isocyanate.

10. Composition de polyuréthane selon l'une des revendications précédentes, **caractérisée en ce que** les billes creuses microscopiques H comprennent des billes de verre creuses qui sont de préférence blanches ou incolores.

11. Composition de polyuréthane selon l'une des revendications précédentes, **caractérisée en ce que** l'agent dessiccant D comprend un tamis moléculaire présentant une dimension de pores d'au moins 2,5 Å.

12. Composition de polyuréthane selon l'une des revendications précédentes, **caractérisée en ce que** le rapport de mélange, en parties en volume, entre le premier et le deuxième composant se situe dans la plage de 5:1 à 1:5, en particulier de 3:1 à 1:3, de manière particulièrement préférée de 2:1 à 1:2.

13. Utilisation d'une composition de polyuréthane selon l'une des revendications 1 à 12 comme mastic, en particulier comme mastic pour le lissage de surface de bois.

14. Procédé pour le lissage d'une surface par remplissage des espaces creux, des fissures, des trous et des fentes dans un substrat, en particulier dans un substrat en bois, comprenant les étapes
a) mélange du premier composant A et du deuxième composant B d'une composition de polyuréthane à deux composants selon l'une des revendications 1 à 10,
b) enduction ou remplissage des espaces creux, des fissures, des trous ou des fentes à remplir sur la surface du substrat par la composition de polyuréthane mélangée dans l'intervalle de sa durée de vie en pot ;
c) pressage optionnel de la composition de polyuréthane appliquée dans l'étape b) sur le substrat et/ou dans les espaces creux, les fissures, les trous ou les fentes à la surface du substrat au moyen d'un cylindre ou d'une presse, de préférence chauffé(e) ;
d) durcissement de la composition de polyuréthane mélangée, introduite dans les espaces creux, les fissures, les trous ou les fentes sur la surface du substrat ;
e) lissage de la surface du substrat enduite par ponçage, abrasion ou sablage.
